# EUROPEAN PATENT APPLICATION

(11) **EP 4 525 471 A1**
(43) Date of publication of application: **19.03.2025**
(21) Application number: 23856435.5
(22) Date of filing: 03.08.2023
(51) Int. Cl.: H04N 23/55

(54) **CAMERA MODULE AND ELECTRONIC DEVICE**

(30) Priority: 25.08.2022 CN 202211027958
(71) Applicant: Huawei Technologies Co., Ltd., Shenzhen, Guangdong 518129 (CN)
(72) Inventor: REN, Li, Shenzhen, Guangdong 518129 (CN); WANG, Wei, Shenzhen, Guangdong 518129 (CN); YE, Haishui, Shenzhen, Guangdong 518129 (CN)
(74) Representative: Pfenning, Meinig & Partner mbB
(86) International application number: PCT/CN2023/111033
(87) International publication number: WO 2024/041345

(57) **Abstract**

This application provides a camera module and an electronic device, and relates to the field of image shooting technologies, to effectively reduce formation of stray light and improve imaging quality of the camera module. The camera module includes a lens assembly and a photosensitive imaging assembly. The lens assembly includes at least one optical lens, at least one of the optical lenses includes a light-filtering surface, and the light-filtering surface is configured to filter out infrared light. The photosensitive imaging assembly includes an imaging area and a non-imaging area. At least one light-shielding layer is disposed on the lens assembly and/or the photosensitive imaging assembly, the light-shielding layer is configured to cut off a light ray on a first optical path, and the first optical path reaches the non-imaging area of the photosensitive imaging assembly through the at least one optical lens.

## Description

This application claims priority to Chinese Patent Application No. 202211027958.0, filed with the China National Intellectual Property Administration on August 25, 2022 and entitled "CAMERA MODULE AND ELECTRONIC DEVICE", which is incorporated herein by reference in its entirety.

### TECHNICAL FIELD

This application relates to the field of image shooting technologies, and in particular, to a camera module and an electronic device.

### BACKGROUND

Camera modules implement imaging functions by gathering and recognizing light rays reflected by target objects. With rapid development of imaging technologies, the camera modules are widely used in electronic devices, and imaging quality of the camera modules becomes an important parameter for evaluating image shooting functions of the electronic devices. However, in an actual imaging process of a camera module, a flare or a light spot is usually generated in a formed image due to stray light, severely affecting imaging quality of the camera module.

### SUMMARY

This application provides a camera module and an electronic device, to effectively reduce impact of stray light on imaging quality of the camera module.

To achieve the foregoing objective, the following technical solutions are used in this application.

According to a first aspect, this application provides a camera module. The camera module includes a lens assembly and a photosensitive imaging assembly. The lens assembly includes at least one optical lens, at least one of the optical lenses includes a light-filtering surface, and the light-filtering surface is configured to filter out infrared light. The photosensitive imaging assembly includes an imaging area and a non-imaging area.

At least one light-shielding layer is disposed on the lens assembly and/or the photosensitive imaging assembly. The light-shielding layer is configured to cut off a light ray on a first optical path, and the first optical path reaches the non-imaging area of the photosensitive imaging assembly through the at least one optical lens.

This embodiment of this application provides the camera module. In an imaging process of the camera module, the light-shielding layer disposed on the lens assembly and/or the photosensitive imaging assembly can cut off the light ray on the first optical path, so that the light ray on the first optical path is prevented from being reflected to the imaging area of the photosensitive imaging assembly and affecting imaging effect of the camera module. This improves imaging quality of the camera module.

In a possible implementation, the lens assembly includes a lens tube, and the light-shielding layer is disposed at a bottom end that is of the lens tube and that faces the photosensitive imaging assembly.

Optionally, the light-shielding layer is bonded to the lens tube by using a structural adhesive. Firmness between the light-shielding layer and the lens tube is enhanced based on the optional manner.

In a possible implementation, the light-shielding layer is disposed on at least one of the optical lenses.

Optionally, the light-shielding layer is bonded to the optical lens by using the structural adhesive. Firmness of the light-shielding layer on the optical lens is enhanced based on the optional manner.

Optionally, the light-shielding layer may be in a round-ring shape.

In a possible implementation, the light-shielding layer is disposed on an optical lens that is closest to the photosensitive imaging assembly in the at least one of the optical lenses.

In a possible implementation, the light-filtering surface and the light-shielding layer are located on a same optical lens.

Based on the foregoing optional manners, the light-shielding layer disposed on the optical lens is used to prevent a light ray reflected by the non-imaging area from being reflected or refracted again by the optical lens and entering the imaging area. This can reduce stray light entering the imaging area, and improve the imaging quality of the camera module.

In a possible implementation, the lens assembly includes a prism, and the prism is disposed at an end that is of the lens assembly and that is close to the photosensitive imaging assembly. A light ray transmitted to the lens assembly is emitted out of the lens assembly sequentially through a light entrance surface, a reflective surface, and a light exit surface of the prism.

The light-shielding layer is disposed on at least one of the light entrance surface, the reflective surface, and the light exit surface.

Based on the foregoing optional manner, the light-shielding layer is disposed on at least one of the light entrance surface, the reflective surface, and the light exit surface of the prism, so that a light ray transmitted to the non-imaging area is prevented from being reflected to the imaging area and affecting the imaging effect of the camera module. This can effectively reduce impact of stray light on the imaging quality of the camera module.

In a possible implementation, the photosensitive imaging assembly includes a printed circuit board PCB and a photosensitive chip disposed on the PCB. The photosensitive chip is electrically connected to the PCB by using a metal mechanical part, and the light-shielding layer is disposed on the metal mechanical part.

Based on the optional manner, the light-shielding layer is disposed on the metal mechanical part that electrically connects the photosensitive chip to the PCB, so that light rays entering the camera module to be transmitted on the metal mechanical part can be reduced, and a light ray transmitted on the metal mechanical part can be prevented from being reflected to the imaging area. This improves the imaging effect of the camera module.

In a possible implementation, the metal mechanical part is located in the non-imaging area, and the light-shielding layer is disposed in the non-imaging area.

Based on the foregoing optional manner, the light-shielding layer is disposed in the non-imaging area of the photosensitive imaging assembly, to prevent a light ray transmitted to the camera module from being transmitted to the non-imaging area. In this way, a light ray transmitted to the non-imaging area cannot be reflected, that is, the light ray transmitted to the non-imaging area does not affect normal imaging of the camera module, thereby effectively improving the imaging quality of the camera module.

In a possible implementation, the light-shielding layer includes any one of an adhesive layer, a silkscreen, an ink layer, a black matrix, a light-shielding ring, and a light-shielding piece.

Optionally, a surface gloss of the light-shielding layer is 0 to 20%, and a light absorption rate of the light-shielding layer is greater than or equal to 90%.

Optionally, the ink layer may be sprayed extinction ink or black ink.

For example, the light-shielding layer may be a structural layer obtained by surface roughening processing and extinction ink spraying processing.

According to a second aspect, an embodiment of this application provides an electronic device. The electronic device includes a housing and the camera module according to any one of the first aspect and the first aspect disposed in the housing.

In a possible implementation, the lens assembly includes a lens tube, and the light-shielding layer is disposed at a bottom end that is of the lens tube and that faces the photosensitive imaging assembly.

In a possible implementation, the light-shielding layer is disposed on at least one of the optical lenses.

In a possible implementation, the light-shielding layer is disposed on an optical lens that is closest to the photosensitive imaging assembly in the at least one of the optical lenses.

In a possible implementation, the light-filtering surface and the light-shielding layer are located on a same optical lens.

In a possible implementation, the lens assembly includes a prism, and the prism is disposed at an end that is of the lens assembly and that is close to the photosensitive imaging assembly. A light ray transmitted to the lens assembly is emitted out of the lens assembly sequentially through a light entrance surface, a reflective surface, and a light exit surface of the prism.

The light-shielding layer is disposed on at least one of the light entrance surface, the reflective surface, and the light exit surface.

In a possible implementation, the photosensitive imaging assembly includes a printed circuit board PCB and a photosensitive chip disposed on the PCB. The photosensitive chip is electrically connected to the PCB by using a metal mechanical part, and the light-shielding layer is disposed on the metal mechanical part.

In a possible implementation, the metal mechanical part is located in the non-imaging area, and the light-shielding layer is disposed in the non-imaging area.

In a possible implementation, the light-shielding layer includes any one of an adhesive layer, a silkscreen, an ink layer, a black matrix, a light-shielding ring, and a light-shielding piece.

For technical effects of the second aspect provided in this application, refer to the technical effects of the optional manners in the first aspect. Details are not described herein.

### BRIEF DESCRIPTION OF DRAWINGS

FIG. 1 is a diagram of a structure of an existing camera module according to an embodiment of this application;
FIG. 2 is a diagram of imaging effect affected by stray light according to an embodiment of this application;
FIG. 3 is an exploded diagram of a structure of a camera module according to an embodiment of this application;
FIG. 4 is a cross-sectional diagram of a structure of a camera module according to an embodiment of this application;
FIG. 5 is a top view of a structure of a photosensitive structure assembly according to an embodiment of this application;
FIG. 6 is a diagram of a structure in which a light-shielding layer is disposed on an optical lens according to an embodiment of this application;
FIG. 7 is a diagram of a shape of a light-shielding layer according to an embodiment of this application;
FIG. 8 is a diagram of another shape of a light-shielding layer according to an embodiment of this application;
FIG. 9 is a diagram of still another shape of a light-shielding layer according to an embodiment of this application;
FIG. 10 is a diagram of a first shape of a light-shielding layer disposed on an optical lens according to an embodiment of this application;
FIG. 11 is a diagram of a second shape of a light-shielding layer disposed on an optical lens according to an embodiment of this application;
FIG. 12 is a diagram of a third shape of a light-shielding layer disposed on an optical lens according to an embodiment of this application;
FIG. 13 is a diagram of a fourth shape of a light-shielding layer disposed on an optical lens according to an embodiment of this application;
FIG. 14 is an exploded diagram of a structure in which a light-shielding layer is disposed on a lens tube according to an embodiment of this application;
FIG. 15 is a cross-sectional diagram of a structure in which a light-shielding layer is disposed on a lens tube according to an embodiment of this application;
FIG. 16 is a front view of a structure in which a prism is disposed in a lens assembly according to an embodiment of this application;
FIG. 17 is a diagram of a structure of a plurality of surfaces of a prism according to an embodiment of this application;
FIG. 18 is a diagram of a structure in which a light-shielding layer is disposed on a light exit surface of a prism according to an embodiment of this application;
FIG. 19 is a diagram of a structure in which a light-shielding layer is disposed on a photosensitive imaging assembly according to an embodiment of this application;
FIG. 20 is an exploded diagram of another structure in which a light-shielding layer is disposed on a photosensitive imaging assembly according to an embodiment of this application; and
FIG. 21 is an overall diagram of another structure in which a light-shielding layer is disposed on a photosensitive imaging assembly according to an embodiment of this application.

### Reference numerals:

1: Lens assembly; 11: Optical Lens; 12: Lens tube; 2: Photosensitive imaging assembly; 21: Imaging area; 22: Non-imaging area; 3: Target object;
100: Lens assembly; 101: Optical lens; 102: Lens tube; 103: Prism; 1031: Light entrance surface; 1032: Reflective surface; 1033: Light exit surface; 104: First housing; 1041: Through hole;
200: Photosensitive imaging assembly; 201: Photosensitive chip; 2011: Imaging area; 2012: Logic area; 202: PCB; 2021: Non-imaging area; 2021a: Transition area; 2021b: Pad area; 2021c: Base plate area;
300: Light-shielding layer;
400: structural adhesive.

### DESCRIPTION OF EMBODIMENTS

The following describes implementations of this application in detail. Examples of the implementations are shown in the accompanying drawings. Same or similar reference numerals represent same or similar elements or elements with same or similar functions throughout. The implementations described below with reference to the accompanying drawings are examples, and are merely used to describe this application, but cannot be understood as a limitation on this application.

It should be understood that, the terms "first" and "second" in description of this application are merely intended for description, and shall not be understood as an indication or implication of relative importance or implicit indication of a quantity of indicated technical features. Therefore, a feature limited by "first" or "second" may explicitly or implicitly include one or more features. In the description of this application, "a plurality of" means two or more, unless otherwise specifically limited.

In the description of this application, it should be noted that, unless otherwise expressly specified and limited, the terms "mount" and "connect" shall be understood in a broad sense. For example, the terms may indicate a fixed connection, a detachable connection, or an integral connection, may indicate a mechanical connection, an electric connection, or mutual communication, or may indicate direct interconnection, indirect interconnection through an intermediate medium, internal communication between two elements, or an interaction relationship between two elements. A person of ordinary skill in the art may understand specific meanings of the foregoing terms in this application based on specific cases.

In the description of this application, it should be understood that an orientation or a position relationship indicated by terms such as "up", "down", "side", "front", and "rear" is an orientation or a position relationship based on mounting, and is merely intended to describe this application and simplify the description, but is not intended to indicate or imply that a described apparatus or element needs to have a specific orientation or needs to be constructed and operated in a specific orientation. Therefore, such terms shall not be understood as a limitation on this application.

In the description of this application, it should be noted that the term "and/or" describes only an association relationship between associated objects and indicates that three relationships may exist. For example, A and/or B may indicate the following three cases: Only A exists, both A and B exist, and only B exists.

It should be further noted that in embodiments of this application, a same reference numeral indicates a same component or a same part. For same parts in embodiments of this application, only one part or component marked with a reference numeral may be used as an example in the figure. It should be understood that the reference numeral is also applicable to another same part or component.

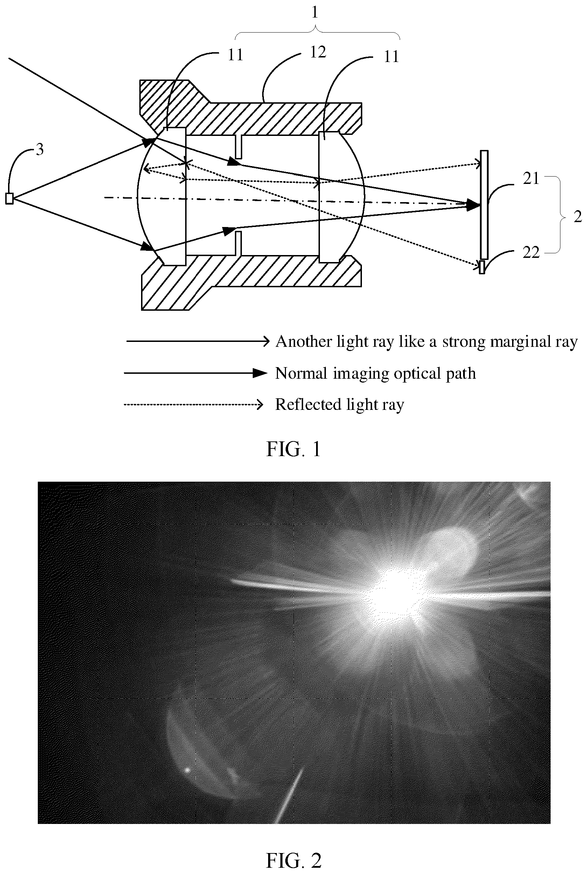

With continuous development of Internet technologies, overall structure designs of camera modules tend to be miniaturized. Infrared filters are removed from most camera modules, to reduce overall thicknesses of the camera modules. For example, FIG. 1 is a diagram of a structure of an existing camera module. Refer to FIG. 1. The existing camera module mainly includes a lens assembly 1 and a photosensitive imaging assembly 2. The lens assembly 1 may include an optical lens 11 and a lens tube 12. The optical lens 11 is disposed in the lens tube 12. The lens assembly 1 is configured to gather light rays reflected by a target object 3 (namely, a photographed object). The photosensitive imaging assembly 2 mainly includes a printed circuit board (Printed Circuit Board, PCB) and a photosensitive chip disposed on the PCB. The photosensitive chip is configured to convert an optical signal into an electrical signal, and the PCB is configured to form an image based on the electrical signal received by the photosensitive chip.

Refer to FIG. 1. An imaging principle of the foregoing camera module is specifically as follows: The lens assembly 1 is used to gather the light rays reflected by the target object 3, and after the light rays gathered to the lens assembly 1 are transmitted to the photosensitive imaging assembly 2, the photosensitive imaging assembly 2 converts the received optical signal into the electrical signal to form the corresponding image, to implement an imaging function.

During actual application of the existing camera module, in addition to the light rays reflected by the target object 3 (that is, a normal imaging optical path in FIG. 1), other unnecessary light rays (that is, stray light) such as strong marginal light rays are also gathered into the lens assembly 1. The unnecessary light rays entering the lens assembly 1 are transmitted to a non-imaging area 22 of the photosensitive imaging assembly 2 after passing through the optical lens 11. After being reflected, the light rays transmitted to the non-imaging area 22 are transmitted to an imaging area 21 of the photosensitive imaging assembly 2. This severely affects normal imaging of the camera module. FIG. 2 is a diagram of imaging effect affected by stray light according to an embodiment of this application. Refer to FIG. 2. There are relatively obvious flares and light spots in a finally formed image, and the imaging effect of a camera module is relatively poor. Therefore, how to effectively reduce impact of stray light on imaging quality of the camera module becomes a technical problem to be urgently resolved.

To effectively reduce impact of stray light on imaging quality of a camera module and improve the imaging quality of the camera module, an embodiment of this application provides a camera module. The camera module includes a lens assembly 100 and a photosensitive imaging assembly 200. The lens assembly 100 includes at least one optical lens 101, and a light-filtering surface configured to filter out infrared light is disposed in at least one of the optical lenses 101. At least one light-shielding layer 300 is disposed on the lens assembly 100 and/or the photosensitive imaging assembly 200, to cut off a light ray on a first optical path, so that the light ray on the first optical path is prevented from entering an imaging area 2011 of the photosensitive imaging assembly 200 and affecting imaging effect of the camera module. In this way, impact of stray light on imaging quality of the camera module is effectively reduced, and the imaging quality of the camera module is improved.

The camera module provided in this embodiment of this application may be used in a plurality of electronic devices. The electronic device includes but is not limited to a camera, a phone (phone), a personal digital assistant (personal digital assistant), a tablet computer, an on-board computer, a laptop computer (laptop computer), a smart screen, an ultra-mobile personal computer (ultra-mobile personal computer, UMPC), a handheld device, a smart watch (smart watch), an event recording device, a monitoring device, and another device with an image shooting or photographing function.

It should be understood that the electronic device may further include a housing, and the camera module provided in this embodiment of this application is disposed in the housing.

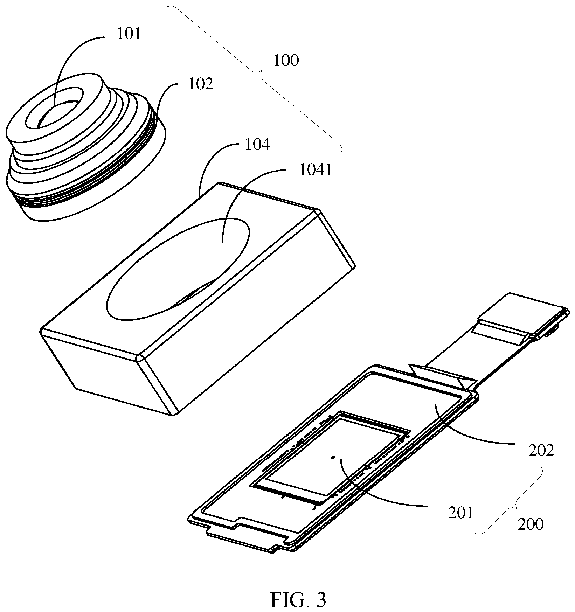

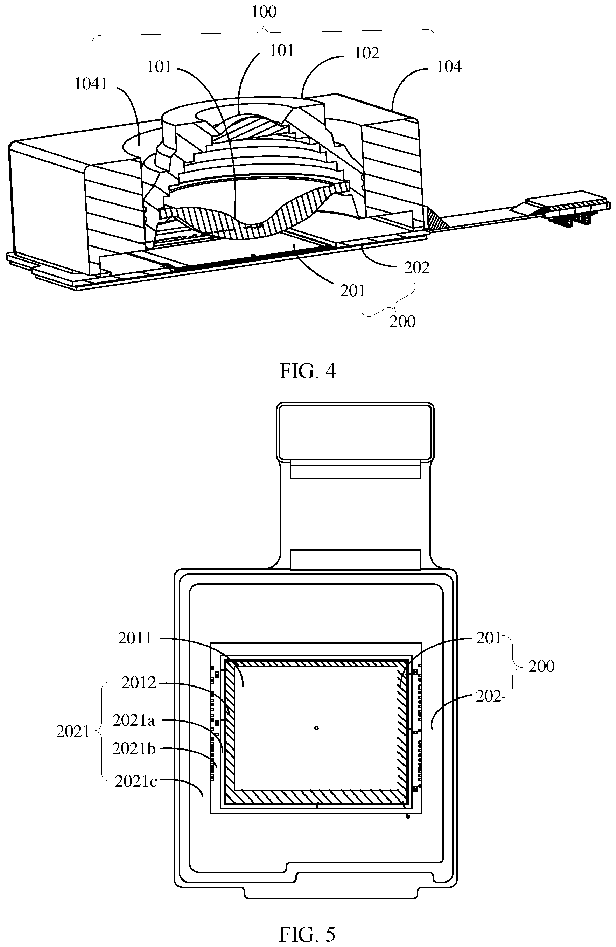

FIG. 3 is an exploded diagram of a structure of a camera module according to an embodiment of this application. FIG. 4 is a cross-sectional diagram of a structure of a camera module according to an embodiment of this application. Refer to FIG. 3 and FIG. 4. The camera module includes a lens assembly 100 and a photosensitive imaging assembly 200. The lens assembly 100 is connected to the photosensitive imaging assembly 200. The lens assembly 100 may include at least one optical lens 101, at least one of the optical lenses 101 includes a light-filtering surface, and the light-filtering surface is configured to filter out infrared light.

It should be understood that a light-filtering coating may be disposed on two surfaces or one surface of the optical lens 101 to form the light-filtering surface, to filter out the infrared light that is to pass through the optical lens 101. For example, the light-filtering coating may be an infrared filtering film. Alternatively, a material that can filter out the infrared light may be added in a process of manufacturing the optical lens 101, so that the manufactured optical lens 101 has a characteristic of filtering out infrared light during actual use.

The lens assembly 100 may include a lens tube 102. At least one of the optical lenses 101 is disposed in the lens tube 102. The lens tube 102 may also be referred to as a lens seat, and is configured to provide support for the optical lens 101.

It should be understood that a manner of disposing the optical lens 101 in the lens tube 102 includes but is not limited to: A groove corresponding to the optical lens 101 is provided on an inner side wall of the lens tube 102, and the optical lens 101 is correspondingly clamped to the lens tube 102 by using the groove on the inner side wall of the lens tube 102. In this case, the optical lens 101 is closely attached to (or in contact with) the groove along a circumferential side wall in an optical axis direction, so that the optical lens 101 is disposed in the lens tube 102.

It is not difficult to understand that, based on the foregoing example, a quantity of grooves provided on the inner side wall of the lens tube 102 is consistent with a quantity of optical lenses 101. The quantity of optical lenses 101 may be set according to an actual application requirement. A quantity, a shape, and a material of the optical lens 101, and a connection between the optical lens 101 and the lens tube 102 are not limited in this application.

Optionally, the lens assembly 100 may further include a motor. The motor is connected to the lens tube 102, and the motor is configured to provide driving force. Driven by the motor, the lens tube 102 can drive the optical lens 101 to move in a direction close to or away from the photosensitive imaging assembly 200, to adjust a focal length of the camera module.

Optionally, the lens assembly 100 may further include a first housing 104. In a possible implementation, a through hole 1041 is provided on the first housing 104, and the lens tube 102 may be disposed in the through hole 1041 of the first housing 104. An outer side wall at one end that is of the lens tube 102 and that is close to the photosensitive imaging assembly 200 is fastened to an inner side wall at one end that is of the first housing 104 and that is close to the photosensitive imaging assembly 200.

Alternatively, one end that is of the lens tube 102 and that is close to the photosensitive imaging assembly 200 is disposed in the through hole 1041 of the first housing 104, the other end that is of the lens tube 102 and that is away from the photosensitive imaging assembly 200 protrudes from the first housing 104, and an outer side wall at the end that is of the lens tube 102 and that is close to the photosensitive imaging assembly 200 is fastened to an inner side wall at one end that is of the first housing 104 and that is close to the photosensitive imaging assembly 200.

A manner in which the first housing 104 is fastened to the end that is of the lens tube 102 and that is close to the photosensitive imaging assembly 200 includes but is not limited to screwing, clamping, bonding, and the like.

It should be understood that, in addition to the foregoing manner, the first housing 104 and the lens tube 102 may alternatively be made into an integrated structure by using an integrated molding technology. In this way, a process of separately manufacturing the first housing 104 and the lens tube 102 can be avoided, and processing difficulty and manufacturing costs can be reduced. In addition, a mechanical part (that is, a mechanical part that is integrally formed by the first housing 104 and the lens tube 102) supporting the optical lens 101 is enabled to have stronger mechanical rigidity, so that stability of the mechanical part that supports the optical lens 101 is improved.

The photosensitive imaging assembly 200 includes a photosensitive chip 201 and a PCB 202, and the photosensitive chip 201 is electrically connected to the PCB 202. Generally, the PCB 202 is electrically connected to the photosensitive chip 201 by using a metal mechanical part (for example, gold or copper) with good conductivity and antioxidation.

A structure design between the photosensitive chip 201 and the PCB 202 includes but is not limited to: A groove for accommodating the photosensitive chip 201 is provided on a surface that is of the PCB 202 and that faces the lens assembly 100, and the photosensitive chip 201 is embedded in the groove.

FIG. 5 is a top view of a structure of a photosensitive imaging assembly 200 according to an embodiment of this application. Refer to FIG. 5. The photosensitive imaging assembly 200 includes an imaging area 2011 and a non-imaging area 2021. Alight ray reflected by a target object is imaged in the imaging area 2011 of the photosensitive imaging assembly 200 after passing through the at least one optical lens 101 of the lens assembly 100.

An area configured to receive an optical signal is the imaging area 2011 of the photosensitive imaging assembly 200, that is, the imaging area 2011 of the photosensitive chip 201. The imaging area 2011 is configured to receive an optical signal required for imaging. An area surrounding the imaging area 2011 is the non-imaging area 2021 (also referred to as a peripheral area) of the photosensitive imaging assembly 200. In other words, the non-imaging area 2021 surrounds the imaging area 2011, and the non-imaging area 2021 is located on an outer side of the imaging area 2011.

Specifically, with reference to FIG. 5, it is assumed that a position of the photosensitive chip 201 in the photosensitive imaging assembly 200 is referred to as an inside area. In this embodiment of this application, the photosensitive imaging assembly 200 may be sequentially divided from inside to outside into the imaging area 2011 of the photosensitive chip 201, a logic area 2012 of the photosensitive chip 201, a transition area 2021a between the photosensitive chip 201 and the PCB 202, a pad area 2021b of the PCB 202, and a base plate area 2021c of the PCB 202. The photosensitive chip 201 includes the logic area 2012 and the imaging area 2011. The imaging area 2011 is a light-absorbing area of the photosensitive imaging assembly 200, and is configured to receive an optical signal to implement an imaging function. The non-imaging area 2021 includes an area other than the imaging area 2011, to be specific, the non-imaging area 2021 includes an area other than the imaging area 2011 of the photosensitive chip 201 in the photosensitive imaging assembly 200. In other words, the non-imaging area 2021 of the photosensitive imaging assembly 200 includes the logic area 2012 of the photosensitive chip 201, the transition area 2021a between the photosensitive chip 201 and the PCB 202, the pad area 2021b of the PCB 202, and the base plate area 2021c of the PCB 202.

It should be understood that the base plate area 2021c is an area other than the imaging area 2011, the logic area 2012, the transition area 2021a, and the pad area 2021b in the photosensitive imaging assembly 200.

It is not difficult to understand that the photosensitive chip 201 may be an image sensor. As an example instead of a limitation, the image sensor may be a charge-coupled device (Charge-coupled device, CCD) image sensor or a complementary metal-oxide-semiconductor (Complementary metal-Oxide-Semiconductor, CMOS) image sensor. A type of the photosensitive chip 201 is not limited in this embodiment of this application.

In this embodiment of this application, the lens assembly 100 may be fastened relative to the photosensitive imaging assembly 200 in a manner of screwing, clamping, bonding, or the like. This is not limited in this application.

For example, a manner in which the lens assembly 100 is fastened to the photosensitive imaging assembly 200 may be that a bottom end that is of the lens tube 102 and that faces the photosensitive imaging assembly 200 is fastened to the PCB 202 in the photosensitive imaging assembly 200. Alternatively, the manner may be that a bottom end that is of the first housing 104 in the lens assembly 100 and that faces the photosensitive imaging assembly 200 is fastened to the PCB 202 in the photosensitive imaging assembly 200, or the like.

It should be noted that, to meet an actual application requirement of the camera module, reduce a thickness of the camera module, and make an assembled camera module increasingly miniaturized according to an actual application requirement, the light-filtering surface having an infrared light filtering function may be disposed or not disposed in the camera module in this embodiment of this application according to the actual application requirement.

For example, if the camera module needs to have the infrared light filtering function according to the actual application requirement, this embodiment of this application provides the light-filtering surface that is configured to filter out infrared light and that is disposed on at least one of the optical lenses 101. Alternatively, a thin film that has the infrared light filtering function may be integrated into the photosensitive imaging assembly 200. In this case, the assembled camera module has the infrared light filtering function when a size of the assembled camera module is reduced. If the camera module does not need to have the infrared light filtering function according to the actual application requirement, for example, a corresponding infrared image needs to be captured according to an infrared imaging principle, the light-filtering surface having the infrared light filtering function may not be disposed on at least one of the optical lenses 101 of the lens assembly 100 in the camera module. Based on this embodiment of this application, an infrared filter disposed between the lens assembly 100 and the photosensitive imaging assembly 200 in the camera module is removed. Compared with an existing camera module in which the infrared filter is disposed between the lens assembly 100 and the photosensitive imaging assembly 200, the light-filtering surface is disposed on at least one of the optical lenses 101 in the lens assembly 100, so that the thickness of the assembled camera module can be effectively reduced by reducing a thickness of the infrared filter.

To reduce entry of other unnecessary light rays into the imaging area 2011, effectively reduce impact of stray light on imaging quality of the camera module, and improve the imaging quality of the camera module, at least one light-shielding layer 300 is disposed on the lens assembly 100 and/or the photosensitive imaging assembly 200 in this embodiment of this application. The light-shielding layer 300 can cut off a light ray on a first optical path, and the first optical path reaches the non-imaging area 2021 of the photosensitive imaging assembly 200 through the at least one optical lens 101.

It should be understood that, in this embodiment of this application, the at least one light-shielding layer 300 may be disposed on the lens assembly 100 or the photosensitive imaging assembly 200; or the at least one light-shielding layer 300 may be disposed on both the lens assembly 100 and the photosensitive imaging assembly 200.

It should be understood that the first optical path includes an optical path along which a light ray transmitted to the camera module is transmitted to the non-imaging area 2021, a transmission path of a reflected light ray that is reflected by the non-imaging area 2021, and an optical path along which the reflected light ray is reflected or refracted to the imaging area 2011.

In this embodiment of this application, a material of the light-shielding layer 300 may be a polymer whose surface gloss is 0 to 20% or 60° and whose light absorption rate is greater than or equal to 90%, for example, a polyester film (also referred to as polyester resin). Alternatively, the material may be, for example, a composite material such as plastic filled with low-reflection microparticles or plastic filled with low-reflection fibers, or may be a metal material or an ink layer.

In different actual application scenarios, the light-shielding layer 300 may alternatively be another structural layer with a reflectivity less than 10% obtained by surface roughening and extinction ink spraying processing. Certainly, the light-shielding layer 300 may alternatively be any one of a silkscreen, an ink layer (for example, black ink), a black matrix (black matrix, BM), a light-shielding ring, or a light-shielding piece.

In a possible implementation, the light-shielding layer 300 may alternatively be an adhesive layer. The adhesive layer may be a black adhesive with a low reflectivity. During actual use, the adhesive layer has low fluidity and high viscosity when the adhesive layer is not solidified. After the adhesive layer is solidified, the adhesive layer can be stacked to a preset height, to meet an actual application requirement. A specific material of the light-shielding layer 300 is not limited in this embodiment of this application.

The following uses a specific embodiment to describe a position for disposing the light-shielding layer 300 in the camera module provided in this application in detail.

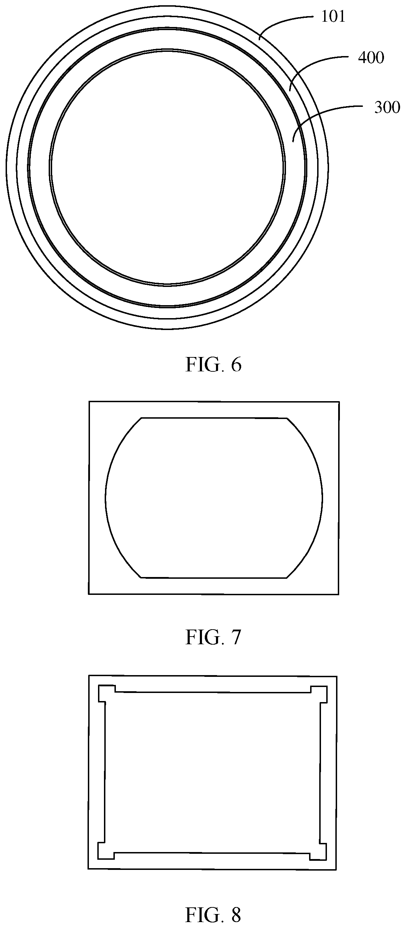

In a possible implementation, the light-shielding layer 300 is disposed on at least one of the optical lenses 101, to be specific, the light-shielding layer 300 is disposed on at least one of the optical lenses 101 of the lens assembly 100. FIG. 6 is a diagram of a structure in which a light-shielding layer 300 is disposed on one optical lens 101 according to an embodiment of this application.

It should be understood that, in an actual assembly process of the camera module, the lens assembly 100 may include a plurality of optical lenses 101. When the lens assembly 100 includes the plurality of optical lenses 101, the light-shielding layer 300 may be disposed on at least one of the plurality of optical lenses 101.

For example, it is assumed that two optical lenses 101, namely an optical lens A and an optical lens B, are disposed in the lens tube 102 of the lens assembly 100. The light-shielding layer 300 may be disposed on the optical lens A or the optical lens B. Alternatively, the light-shielding layer 300 may be disposed on both the optical lens A and an edge of the optical lens B.

It is not difficult to understand that the light-shielding layer 300 may be disposed on a surface that is of at least one of the optical lenses 101 and that is close to the photosensitive imaging assembly 200, and/or the light-shielding layer 300 may be disposed on a surface that is of at least one of the optical lenses 101 and that is away from the photosensitive imaging assembly 200. In other words, the light-shielding layer 300 may be disposed on the surface that is of at least one of the optical lenses 101 and that is close to the photosensitive imaging assembly 200. Alternatively, the light-shielding layer 300 may be disposed on the surface that is of at least one of the optical lenses 101 and that is away from the photosensitive imaging assembly 200. Alternatively, the light-shielding layer 300 may be disposed on both the surface that is of at least one of the optical lenses 101 and that is close to the photosensitive imaging assembly 200 and the surface that is of at least one of the optical lenses 101 and that is away from the photosensitive imaging assembly 200.

It should be noted that in an actual design process, the light-shielding layer 300 and the light-filtering surface may be disposed on different optical lenses 101, or may be disposed on a same optical lens 101.

For example, it is assumed that the lens assembly 100 includes the two optical lenses 101: the optical lens A and the optical lens B. The light-filtering surface may be disposed on the optical lens A, and the light-shielding layer 300 may be disposed on the optical lens B. Alternatively, the light-filtering surface may be disposed on the optical lens B, and the light-shielding layer 300 may be disposed on the optical lens A. Alternatively, both the light-filtering surface and the light-shielding layer 300 may be disposed on the optical lens A or the optical lens B. Certainly, both the light-filtering surface and the light-shielding layer 300 may be disposed on the optical lens A and the optical lens B.

To simplify an assembly procedure of the camera module and facilitate disposition of the light-shielding layer 300, in a possible implementation, the light-shielding layer 300 may be disposed on an optical lens 101 that is closest to the photosensitive imaging assembly 200 in the at least one of the optical lenses 101.

According to the foregoing manner of disposing the light-shielding layer 300 on at least one of the optical lenses 101, a light ray reflected by the non-imaging area 2021 can be prevented from being reflected or refracted again by the optical lens 101 and entering the imaging area 2011. This can reduce stray light entering the imaging area 2011, and improve the imaging quality of the camera module.

As an example instead of a limitation, the at least one light-shielding layer 300 laid on the optical lens 101 is in a round-ring shape, for example, a circular ring or a racetrack. If the light-shielding layer 300 laid on the optical lens 101 is in the round-ring shape, a width of the light-shielding layer 300 laid on the optical lens 101 is capable of cutting off the light ray reflected by the non-imaging area 2021 of the photosensitive imaging assembly 200. The width of the light-shielding layer 300 laid on the optical lens 101 is a difference between an inner radius and an outer radius of the round-ring shape.

Optionally, as a shape of the optical lens 101 in the lens assembly 100 changes, the light-shielding layer 300 disposed on the optical lens 101 may be in the round-ring shape, or may be in another ring shape shown in FIG. 7 to FIG. 9. A shape, a width, and a thickness (a height of the light-shielding layer 300 along an optical axis direction of the optical lens 101) of the light-shielding layer 300 laid on the optical lens 101 are not limited in this application.

It should be understood that when the lens assembly 100 includes a plurality of optical lenses 101, patterns of light-shielding layers 300 disposed on the plurality of optical lenses 101 may be the same or may be different. This is not limited in this application. For example, when the lens assembly 100 includes two optical lenses 101, the light-shielding layer 300 in any ring shape shown in FIG. 7 to FIG. 9 may be separately disposed on the two optical lenses 101.

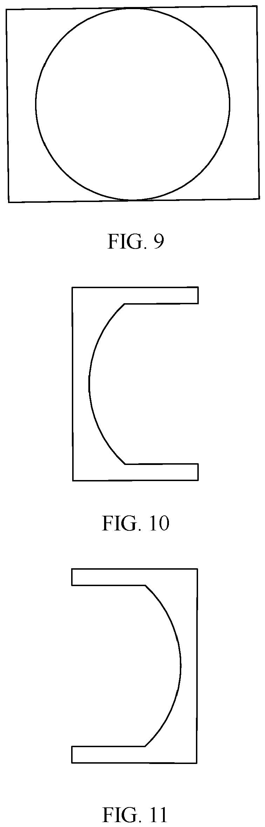

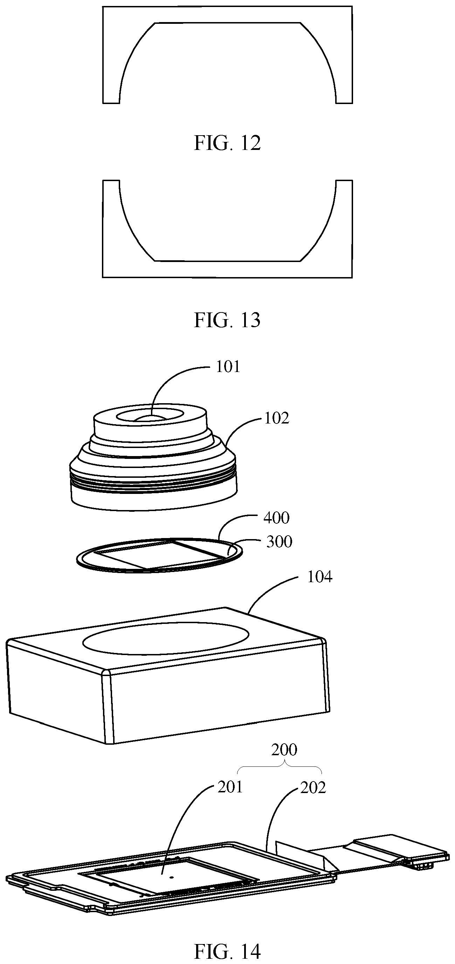

For another example, when the lens assembly 100 includes two optical lenses 101, it is assumed that the two optical lenses 101 are an optical lens A and an optical lens B, and the optical lens A and the optical lens B are disposed side by side. A pattern (or a shape) of a light-shielding layer 300 disposed on the optical lens A may be shown in FIG. 10, and a pattern of a light-shielding layer 300 disposed on the optical lens B may be shown in FIG. 11. Alternatively, a pattern of the light-shielding layer 300 on the optical lens A may be shown in FIG. 12, and a pattern of the light-shielding layer 300 on the optical lens B may be shown in FIG. 13. Although patterns of the light-shielding layers 300 disposed on the optical lens A and the optical lens B are different, positions of the light-shielding layers 300 disposed on the optical lens A and the optical lens B can effectively cut off an unnecessary light ray reflected by the non-imaging area 2021 of the photosensitive imaging assembly 200. Shapes and sizes of the light-shielding layers 300 disposed on the optical lens A and the optical lens B are not limited in this application.

Optionally, to facilitate fastening of the light-shielding layer 300 and avoid detaching of the light-shielding layer 300 during long-term use, with reference to FIG. 6, a structural adhesive 400 may be disposed between the light-shielding layer 300 and the optical lens 101. In other words, the light-shielding layer 300 is bonded to the optical lens 101 by using the structural adhesive 400, to enhance practicability of the light-shielding layer 300 and improve firmness of the light-shielding layer 300 on the optical lens 101.

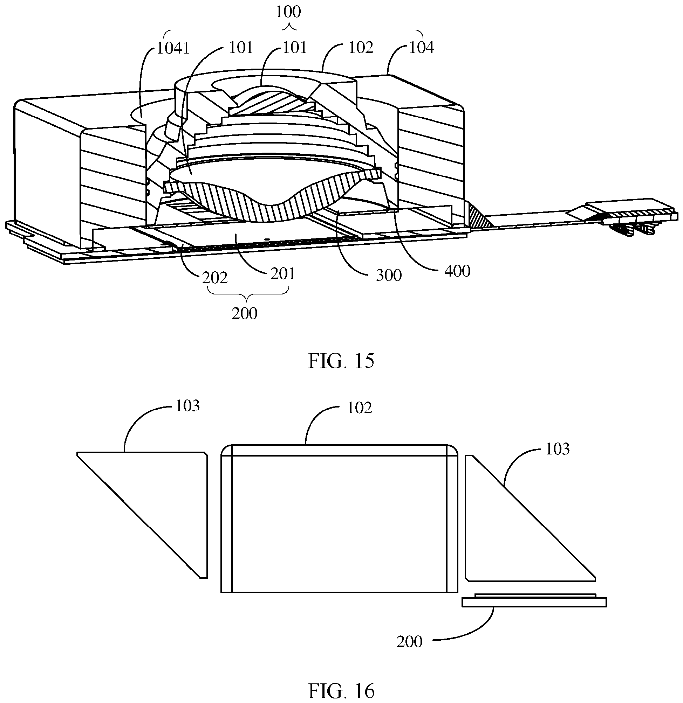

In a possible implementation, FIG. 14 is an exploded diagram of a structure in which a light-shielding layer 300 is disposed on a lens tube 102 according to an embodiment of this application. FIG. 15 is a cross-sectional diagram of a structure in which a light-shielding layer 300 is disposed on a lens tube 102 according to an embodiment of this application. Refer to FIG. 14 and FIG. 15. The lens assembly 100 may include the lens tube 102, and the light-shielding layer 300 is disposed at a bottom end that is of the lens tube 102 and that faces the photosensitive imaging assembly 200, that is, the light-shielding layer 300 is disposed on a bottom end surface that is of the lens tube 102 and that faces the photosensitive imaging assembly 200.

It should be understood that the light-shielding layer 300 may be disposed at the bottom end that is of the lens tube 102 and that faces the photosensitive imaging assembly 200, provided that a width of the light-shielding layer 300 laid along a first direction is capable of preventing the light ray reflected by the non-imaging area 2021 of the photosensitive imaging assembly 200 from entering the imaging area 2011. The first direction is a direction perpendicular to the optical axis direction of the optical lens 101 in the camera module.

It should be noted that, when the lens assembly 100 further includes the first housing 104, and the outer side wall at the end that is of the lens tube 102 and that is close to the photosensitive imaging assembly 200 is fastened to the inner side wall at the end that is of the first housing 104 and that is close to the photosensitive imaging assembly 200, or the first housing 104 and the lens tube 102 are made into the integrated structure by using the integrated molding technology, based on the foregoing possible embodiment, the light-shielding layer 300 may alternatively be disposed at a bottom end that is of the first housing 104 and that is close to the photosensitive imaging assembly 200.

For example, with reference to FIG. 15, a stepped hole is provided on the first housing 104. The stepped hole includes a small hole section and a large hole section. The small hole section is the through hole 1041 and is configured to accommodate the lens tube 102, the large hole section is located between the through hole 1041 and the photosensitive imaging assembly 200, and the light-shielding layer 300 is disposed at a bottom end that is of the large hole section and that faces the photosensitive imaging assembly 200, provided that the width of the light-shielding layer 300 laid along the first direction is capable of preventing the light ray reflected by the non-imaging area 2021 of the photosensitive imaging assembly 200 from entering the imaging area 2011.

It should be noted that, in this implementation, a part of the light-shielding layer 300 is disposed on the lens tube 102 and/or the first housing 104, and the other part extends along the first direction. The part extending along the first direction is configured to cut off the light ray on the first optical path.

Optionally, in an assembly process of the light-shielding layer 300, the light-shielding layer 300 may alternatively be bonded, by using the structural adhesive 400, to the bottom end that is of the lens tube 102 and that faces the photosensitive imaging assembly 200 or the bottom end that is of the first housing 104 and that is close to the photosensitive imaging assembly 200, to improve structural strength of the light-shielding layer 300.

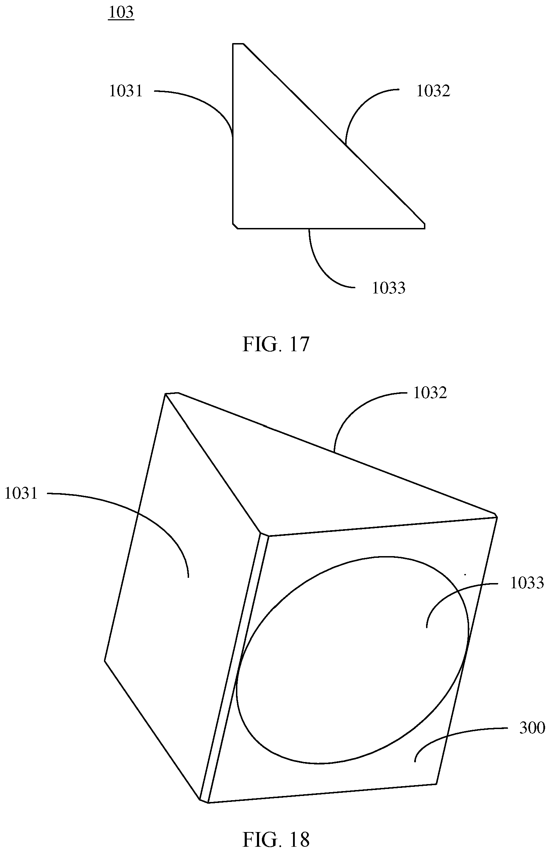

In another possible implementation, FIG. 16 is a front view of a structure in which a prism 103 is disposed in a lens assembly 100 according to an embodiment of this application. FIG. 17 is a diagram of a structure of a plurality of surfaces of a prism 103 according to an embodiment of this application. FIG. 18 is a diagram of a structure in which a light-shielding layer 300 is disposed on a light exit surface 1033 of a prism 103 according to an embodiment of this application. Refer to FIG. 16 to FIG. 18. The lens assembly 100 may include the prism 103. The prism 103 is disposed at an end that is of the lens assembly 100 and that is close to the photosensitive imaging assembly 200. A light ray transmitted to the lens assembly 100 is emitted out of the lens assembly 100 sequentially through a light entrance surface 1031, a reflective surface 1032, and a light exit surface 1033 of the prism 103. The light-shielding layer 300 is disposed on at least one of the light entrance surface 1031, the reflective surface 1032, and the light exit surface 1033 of the prism 103.

It should be understood that the light entrance surface 1031 of the prism 103 is a surface through which a light ray is transmitted to the prism 103. The reflective surface 1032 is a surface on which the light ray that is transmitted to the prism 103 is reflected. The light exit surface 1033 is a surface through which the light ray is emitted out of the prism 103.

Optionally, the prism 103 includes but is not limited to a triangular prism, a tetrahedral prism, a pentaprism, or the like. Shapes and a quantity of prisms 103 are not limited in this embodiment of this application.

For example, if the lens assembly 100 includes one prism 103, the prism 103 is disposed at the end that is of the lens tube 102 and that is close to the photosensitive imaging assembly 200. The light ray reflected by the target object is transmitted to the light entrance surface 1031 of the prism 103 after passing through the optical lens 101, and the light ray that enters through the light entrance surface 1031 of the prism 103 is reflected by the reflective surface 1032 of the prism 103 and then is emitted from the light exit surface 1033 of the prism 103. The light-shielding layer 300 may be disposed on the light entrance surface 1031 of the prism 103, to reduce other unnecessary light rays (for example, a strong marginal ray) emitted from the light entrance surface 1031 of the prism 103. Alternatively, the light-shielding layer 300 may be disposed on the reflective surface 1032 of the prism 103, to reduce other unnecessary light rays emitted from the reflective surface 1032 of the prism 103. Alternatively, the light-shielding layer 300 may be disposed on the light exit surface 1033 of the prism 103, to reduce other unnecessary light rays emitted from the light exit surface 1033 of the prism 103.

Certainly, the light-shielding layer 300 may be disposed on both the light entrance surface 1031 and the reflective surface 1032 of the prism 103. Alternatively, the light-shielding layer 300 is disposed on both the light entrance surface 1031 and the light exit surface 1033 of the prism 103. Alternatively, the light-shielding layer 300 is disposed on both the reflective surface 1032 and the light exit surface 1033 of the prism 103. Alternatively, the light-shielding layer 300 is disposed on all the light entrance surface 1031, the reflective surface 1032, and the light exit surface 1033 of the prism 103. This can reduce entry of other unnecessary light rays reflected by the non-imaging area 2021 of the photosensitive imaging assembly 200 into the imaging area 2011, effectively reduce impact of the other unnecessary light rays on normal imaging of the camera module, and improve the imaging quality of the camera module.

It should be noted that, if the lens assembly 100 includes two prisms 103: a prism C and a prism D. The prism C may be disposed at one end that is of the lens assembly 100 and that is away from the photosensitive imaging assembly 200, and the prism D may be disposed at the other end that is of the lens assembly 100 and that is close to the photosensitive imaging assembly 200. Alternatively, the prism D is disposed at one end that is of the lens assembly 100 and that is away from the photosensitive imaging assembly 200, and the prism C is disposed at the other end that is of the lens assembly 100 and that is close to the photosensitive imaging assembly 200. In this embodiment of this application, the light-shielding layer 300 may be separately disposed on at least one of a light entrance surface 1031 of the prism C and/or the prism D, a reflective surface 1032 of the prism C and/or the prism D, and a light exit surface 1033 of the prism C and/or the prism D.

In the camera module provided with the two prisms 103, during actual use, the prism 103 disposed at the end that is of the lens assembly 100 and that is away from the photosensitive imaging assembly 200 may rotate with movement of a reference light ray, to implement an image stabilization function. A range for disposing the light-shielding layer 300 needs to be determined based on a rotation angle of the prism 103. In this case, an area of the light-shielding layer 300 on the prism 103 at the end that is of the lens assembly 100 and that is away from the photosensitive imaging assembly 200 cannot be accurately designed in the assembly process of the camera module. Therefore, in a possible implementation, when the lens assembly 100 includes the two prisms 103, the light-shielding layer 300 is disposed on at least one of the light entrance surface 1031, the reflective surface 1032, and the light exit surface 1033 of the prism 103 at the other end that is of the lens assembly 100 and that is close to the photosensitive imaging assembly 200.

Optionally, the light-shielding layer 300 may alternatively be disposed on at least one of the light entrance surface 1031, the reflective surface 1032, and the light exit surface 1033 of the prism 103 by using the structural adhesive 400.

Optionally, a shape of the light-shielding layer 300 disposed on the prism 103 may be a ring shape with a round inner ring and a rectangular outer ring shown in FIG. 18, or may be ring shapes shown in FIG. 7 and FIG. 8. By the shape of the light-shielding layer 300 laid on the prism 103 and a width of the light-shielding layer 300 along a second direction, the light-shielding layer 300 can prevent the light ray reflected by the non-imaging area 2021 of the photosensitive imaging assembly 200 from entering the imaging area 2011. The second direction is a direction parallel to the light entrance surface 1031 of the prism 103, or a direction parallel to the reflective surface 1032 of the prism 103, or a direction parallel to the light exit surface 1033 of the prism 103. A shape, a width, and a thickness of the light-shielding layer 300 laid on the prism 103 are not limited in this application.

In a possible implementation, the light-shielding layer 300 may alternatively be disposed in the non-imaging area 2021. In other words, the light-shielding layer 300 is disposed in an area other than the imaging area 2011 in the photosensitive imaging assembly 200.

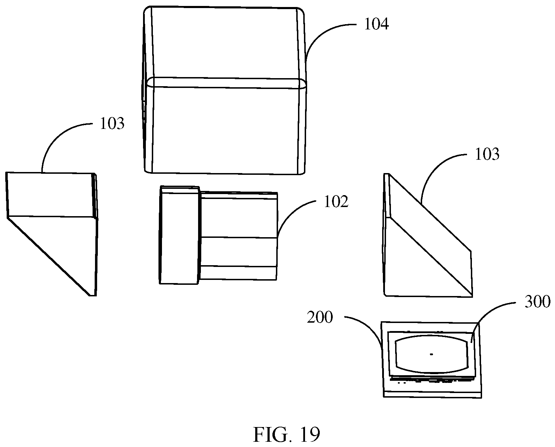

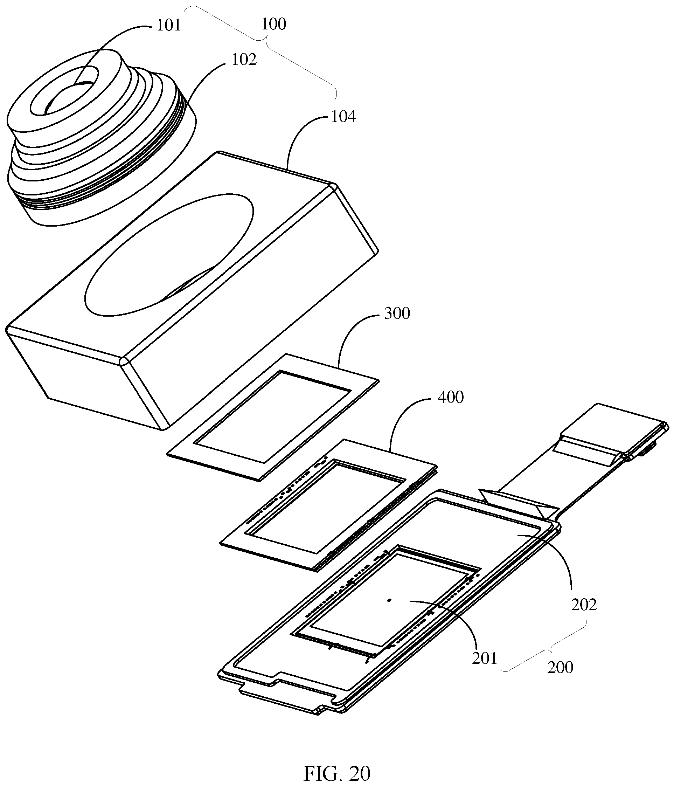

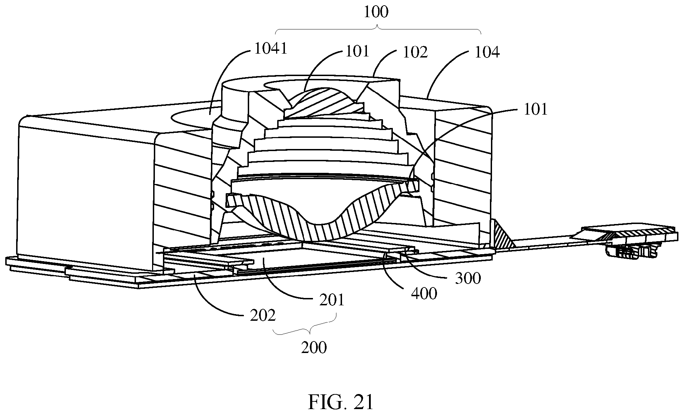

For example, FIG. 19 is a diagram of a structure in which a light-shielding layer 300 is disposed on a photosensitive imaging assembly 200 according to an embodiment of this application. FIG. 20 is an exploded diagram of another structure in which a light-shielding layer 300 is disposed on a photosensitive imaging assembly 200 according to an embodiment of this application. FIG. 21 is an overall diagram of another structure in which a light-shielding layer 300 is disposed on a photosensitive imaging assembly 200 according to an embodiment of this application. Refer to FIG. 19 to FIG. 21. Regardless of whether the lens assembly 100 includes the prism 103, the lens tube 102, and the first housing 104, or the lens assembly 100 includes the at least one optical lens 101, the lens tube 102, and the first housing 104, the light-shielding layer 300 may be disposed in the area other than the imaging area 2011 in the photosensitive imaging assembly 200. The light-shielding layer 300 can prevent generation of the another unnecessary light ray reflected by the non-imaging area 2021, and prevent another unnecessary light ray that is emitted from the lens assembly 100 to the non-imaging area 2021 from being reflected or refracted and entering the imaging area 2011. This improves imaging effect of the camera module.

It should be understood that the metal mechanical part that is configured to electrically connect the photosensitive chip 201 to the PCB 202 usually has a relatively strong reflectivity. The metal mechanical part is mainly disposed in the logic area 2012 of the photosensitive chip 201, the transition area 2021a between the photosensitive chip 201 and the PCB 202, and the pad area 2021b of the PCB 202. If a light ray is reflected by the metal mechanical part, the reflected light ray enters the imaging area 2011 after being reflected and/or refracted again, and stray light is generated. As a result, the imaging quality of the camera module is affected. Therefore, in a possible implementation, the light-shielding layer 300 may be disposed in the logic area 2012 of the photosensitive chip 201, the transition area 2021a between the photosensitive chip 201 and the PCB 202, and the pad area 2021b of the PCB 202 that are shown in FIG. 5, and is configured to cut off an unnecessary light ray transmitted to the logic area 2012, the transition area 2021a, and the pad area 2021b, to avoid reflection of the light ray transmitted to the foregoing areas and impact on the imaging quality of the camera module.

It is not difficult to understand that, during actual manufacture, the light-shielding layer 300 may alternatively be disposed in the logic area 2012 of the photosensitive chip 201, the transition area 2021a between the photosensitive chip 201 and the PCB 202, the pad area 2021b of the PCB 202, and the base plate area 2021c of the PCB 202. This is not limited in this application.

It is not difficult to understand that a shape of the light-shielding layer 300 laid on the photosensitive imaging assembly 200 may be shown in FIG. 7 to FIG. 9, provided that an unnecessary light ray that is transmitted to the non-imaging area 2021 of the photosensitive imaging assembly 200 is prevented from being reflected (or is absorbed). A specific shape of the laid light-shielding layer 300 is not limited in this application.

It should be noted that, with a change in an assembly relationship between the photosensitive chip 201 and the PCB 202 in the photosensitive imaging assembly 200, or a change in structures of the photosensitive chip 201 and the PCB 202, the shape of the laid light-shielding layer 300 is capable of preventing an unnecessary light ray from entering the imaging area 2011 after reflection and/or refraction in the camera module.

Optionally, the structural adhesive 400 is disposed between the light-shielding layer 300 and the photosensitive imaging assembly 200, and is configured to fasten the light-shielding layer 300 to the photosensitive imaging assembly 200.

To reduce an area for disposing the light-shielding layer 300 and reduce costs, in a possible implementation, the metal mechanical part that is configured to electrically connect the photosensitive chip 201 to the PCB 202 is located in the non-imaging area 2021, and the light-shielding layer 300 may be disposed on the metal mechanical part. The light-shielding layer 300 is disposed on the metal mechanical part, so that light rays reaching the metal mechanical part of the photosensitive imaging assembly 200 through the optical lens 101 can be reduced, and a light ray that is transmitted on the metal structure is prevented from being reflected to the imaging area 2011. This improves the imaging effect of the camera module.

It should be noted that, when the light-shielding layer 300 is an adhesive layer, the adhesive layer covering the metal mechanical part is coated on the metal mechanical part in the non-imaging area 2021 by using characteristics of low fluidity and high viscosity when the adhesive layer is not solidified, to prevent the adhesive layer from overflowing to the imaging area 2011. After the adhesive layer is solidified, a stacked height of the adhesive layer can be greater than a height of the metal mechanical part, so that the adhesive layer can wrap the metal mechanical part in the non-imaging area 2021. A height, a shape, and a specific coating process of the adhesive layer are not limited in this application.

It is not difficult to understand that a light-shielding layer 300 may be further coated on an inner side wall of the lens tube 102 and/or an inner side wall of the first housing 104 in at least one of the following forms: adhesive layer, silkscreen, ink layer, or BM. This prevents a light ray generated after an unnecessary light ray is reflected on the inner side wall of the lens tube 102 from entering the imaging area 2011, to reduce impact of stray light on the imaging quality of the camera module.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A camera module, wherein the camera module comprises a lens assembly (100) and a photosensitive imaging assembly (200), the lens assembly (100) comprises at least one optical lens (101), at least one of the optical lenses (101) comprises a light-filtering surface, the light-filtering surface is configured to filter out infrared light, and the photosensitive imaging assembly (200) comprises an imaging area (2011) and a non-imaging area (2021); and
at least one light-shielding layer (300) is disposed on the lens assembly (100) and/or the photosensitive imaging assembly (200), the light-shielding layer (300) is configured to cut off a light ray on a first optical path, and the first optical path reaches the non-imaging area (2021) of the photosensitive imaging assembly (200) through the at least one optical lens (101).

2. The camera module according to claim 1, wherein the lens assembly (100) comprises a lens tube (102), and the light-shielding layer (300) is disposed at a bottom end that is of the lens tube (102) and that faces the photosensitive imaging assembly (200).

3. The camera module according to claim 1 or 2, wherein the light-shielding layer (300) is disposed on at least one of the optical lenses (101).

4. The camera module according to claim 3, wherein the light-shielding layer (300) is disposed on the optical lens (101) that is closest to the photosensitive imaging assembly (200) in the at least one of the optical lenses (101).

5. The camera module according to any one of claims 1 to 4, wherein the light-filtering surface and the light-shielding layer (300) are located on a same optical lens (101).

6. The camera module according to any one of claims 1 to 5, wherein the lens assembly (100) comprises a prism (103), the prism (103) is disposed at an end that is of the lens assembly (100) and that is close to the photosensitive imaging assembly (200), and a light ray transmitted to the lens assembly (100) is emitted out of the lens assembly (100) sequentially through a light entrance surface (1031), a reflective surface (1032), and a light exit surface (1033) of the prism (103); and
the light-shielding layer (300) is disposed on at least one of the light entrance surface (1031) of the prism (103), the reflective surface (1032) of the prism (103), and the light exit surface (1033) of the prism (103).

7. The camera module according to any one of claims 1 to 6, wherein the photosensitive imaging assembly (200) comprises a printed circuit board PCB (202) and a photosensitive chip (201) disposed on the PCB (202), the photosensitive chip (201) is electrically connected to the PCB (202) by using a metal mechanical part, and the light-shielding layer (300) is disposed on the metal mechanical part.

8. The camera module according to claim 7, wherein the metal mechanical part is located in the non-imaging area (2021), and the light-shielding layer (300) is disposed in the non-imaging area (2021).

9. The camera module according to any one of claims 1 to 8, wherein the light-shielding layer (300) comprises any one of an adhesive layer, a silkscreen, an ink layer, a black matrix, a light-shielding ring, and a light-shielding piece.

10. An electronic device, comprising a housing and the camera module according to any one of claims 1 to 9 disposed in the housing.

11. The electronic device according to claim 10, wherein the camera module comprises a lens assembly (100) and a photosensitive imaging assembly (200), the lens assembly (100) comprises at least one optical lens (101), at least one of the optical lenses (101) comprises a light-filtering surface, the light-filtering surface is configured to filter out infrared light, and the photosensitive imaging assembly (200) comprises an imaging area (2011) and a non-imaging area (2021); and
at least one light-shielding layer (300) is disposed on the lens assembly (100) and/or the photosensitive imaging assembly (200), the light-shielding layer (300) is configured to cut off a light ray on a first optical path, and the first optical path reaches the non-imaging area (2021) of the photosensitive imaging assembly (200) through the at least one optical lens (101).

12. The electronic device according to claim 11, wherein the lens assembly (100) comprises a lens tube (102), and the light-shielding layer (300) is disposed at a bottom end that is of the lens tube (102) and that faces the photosensitive imaging assembly (200).

13. The electronic device according to claim 11 or 12, wherein the light-shielding layer (300) is disposed on at least one of the optical lenses (101).

14. The electronic device according to claim 13, wherein the light-shielding layer (300) is disposed on the optical lens (101) that is closest to the photosensitive imaging assembly (200) in the at least one of the optical lenses (101).

15. The electronic device according to any one of claims 11 to 14, wherein the light-filtering surface and the light-shielding layer (300) are located on a same optical lens (101).

16. The electronic device according to any one of claims 11 to 15, wherein the lens assembly (100) comprises a prism (103), the prism (103) is disposed at an end that is of the lens assembly (100) and that is close to the photosensitive imaging assembly (200), and a light ray transmitted to the lens assembly (100) is emitted out of the lens assembly (100) sequentially through a light entrance surface (1031), a reflective surface (1032), and a light exit surface (1033) of the prism (103); and
the light-shielding layer (300) is disposed on at least one of the light entrance surface (1031) of the prism (103), the reflective surface (1032) of the prism (103), and the light exit surface (1033) of the prism (103).

17. The electronic device according to any one of claims 11 to 16, wherein the photosensitive imaging assembly (200) comprises a printed circuit board PCB (202) and a photosensitive chip (201) disposed on the PCB (202), the photosensitive chip (201) is electrically connected to the PCB (202) by using a metal mechanical part, and the light-shielding layer (300) is disposed on the metal mechanical part.

18. The electronic device according to claim 17, wherein the metal mechanical part is located in the non-imaging area (2021), and the light-shielding layer (300) is disposed in the non-imaging area (2021).

19. The electronic device according to any one of claims 11 to 18, wherein the light-shielding layer (300) comprises any one of an adhesive layer, a silkscreen, an ink layer, a black matrix, a light-shielding ring, and a light-shielding piece.
